(19) Europäisches Patentamt
European Patent Office
Office européen des brevets

(11) Veröffentlichungsnummer: **0 226 127**
**A2**

(12) # EUROPÄISCHE PATENTANMELDUNG

(21) Anmeldenummer: 86116799.7

(22) Anmeldetag: 03.12.86

(51) Int. Cl.[4]: **C08L 69/00**, H01B 3/30

(30) Priorität: 14.12.85 DE 3544296

(43) Veröffentlichungstag der Anmeldung: 24.06.87 Patentblatt 87/26

(84) Benannte Vertragsstaaten: DE ES FR GB IT NL

(71) Anmelder: BAYER AG
Konzernverwaltung RP Patentabteilung
D-5090 Leverkusen 1 Bayerwerk(DE)

(72) Erfinder: Kirsch, Jürgen, Dr.
Hahnenweg 1
D-5000 Köln 80(DE)
Erfinder: Horst, Peters, Dr.
Winterberg 25
D-5090 Leverkusen 3(DE)
Erfinder: Baasch, Peter
Vinzenz-Feckter-Strasse 17
D-5060 Bergisch Gladbach 2(DE)
Erfinder: Kress, Hans-Jürgen, Dr.
Scheiblerstrasse 111
D-4150 Krefeld(DE)
Erfinder: Lindner, Christian, Dr.
Riehler Strasse 200
D-5000 Köln 60(DE)

(54) **Thermoplastische Formmassen mit hoher Kriechstromfestigkeit.**

(57) Gegenstand der vorliegenden Erfindung sind Formmassen enthaltend halogenierte Copolycarbonate, Pfropfpolymerisate auf Basis eines Acrylatkautschuks, thermoplastische Copolymerisate, Tetrafluorethylenpolymerisate in koagulierter Form mit Pfropfpolymerisaten, Metallverbindungen aus Antimon oder Wismut und $TiO_2$ sowie gegebenenfalls niedermolekulare, organische Halogenverbindungen, Stabilisatoren, Fließmittel, Antistatika und/oder Entformungsmittel, sowie ein Verfahren zur Herstellung dieser Formmassen.

EP 0 226 127 A2

# Thermoplastische Formmassen mit hoher Kriechstromfestigkeit

Aus der DE-OS 3 322 260 sind flammwidrige thermoplastische Formmassen bekannt, auf Basis von Polycarbonaten, SAN-Pfropfpolymerisaten, thermoplastischen Polymerisaten, Halogenverbindungen, Antimon und feinteiligem Tetrafluorethylenpolymerisat wobei die Einarbeitung des Tetrafluorethylenpolymerisats über Mischungen mit Emulsionen der SAN-Pfropfpolymerisate und gegebenenfalls thermoplastischen Polymerisate durch Koagulation erfolgt. Dabei ist das Gewichtsverhältnis von Pfropfpolymerisat und gegebenenfalls thermoplastischem Polymerisat zu Tetrafluorethylenpolymerisat zwischen 99,9 zu 0,1 und 80 zu 20. Als Basis für die SAN-Pfropfpolymerisate können sowohl Dienkautschuke als auch Alkylacrylatkautschuke mit einer mittleren Teilchengröße von 0,1 bis 2 µm dienen. Die Formmassen zeichnen sich neben der Flammwidrigkeit durch verbesserte thermoplastische Verarbeitbarkeit aus. Die Formmassen können Ruß enthalten (siehe Beispiele der DE-OS 3 322 260). Gemäß Seite 16 dieser DE-OS läßt sich dieses Prinzip der Einarbeitung von Tetrafluorethylenpolymerisaten auf alle Polycarbonat-haltigen Formmassen übertragen.

Bekannt ist außerdem, daß der Zusatz von $TiO_2$ zu Polycarbonaten in Mengen von 10 bis 50 Gewichtsprozent, bezogen auf Gemisch, deren Kriechstromfestigkeit verbessert (DE-OS 2 315 887).

Bekannt ist auch, die Kriechstromfestigkeit von Polycarbonaten durch den kombinierten Zusatz von Cristoballit und inerten Pigmenten zu verbessern, wobei an Pigmenten 2 bis 20 Gewichtsprozent, bezogen auf Polycarbonat, eingesetzt werden (siehe DE-OS 2 324 427).

Gemäß DE-OS 2 327 014 werden Quarzmineral-und $TiO_2$-haltigen kriechstromfesten Polycarbonatformmassen noch zusätzlich Alkoxysilangruppen-oder Acyloxysilangruppen-haltige, Epoxydgruppen-haltige Vinylpolymerisate zur Verhinderung eines Verlustes an mechanischen Eigenschaften der füllstoffhaltigen, kriechstromfesten Polycarbonate zugegeben.

Aus der DE-OS 2 345 799 sind kriechstromfeste Polycarbonatformmassen bekannt, die einen Gehalt von 0,05 bis 10 Gew.-% an Oxidations-und/oder Verbrennungskatalysatoren enthalten. Als solche sind spezielle Metalle und/oder deren Oxide geeignet. Als Trägermaterial für die dem Polycarbonat zuzusetzenden Verbrennungsdkatalysatoren kann auch $TiO_2$ dienen. Die Mengenverhältnisse Katalysator zu Träger liegen zwischen 1:1 und 1:100.

Gegenstand der vorliegenden Erfindung sind thermoplastische Formmassen enthaltend

A. 60 bis 85 Gew.-Teile, bezogen auf 100 Gew.-Teile A+B+C eines halogenhaltigen Copolycarbonats aus einem zweiwertigen Phenol und einem zweiwertigen halogenierten, vorzugsweise bromierten Phenol, wobei das Copolycarbonat 3-20 Gew.-% Halogen, insbesondere in Form von einkondensierten, halogenierten Diphenolen enthält,

B. 10 bis 30 Gew.-Teile, bezogen auf 100 Gew.-Teile A+B+C eines Pfropfpolymerisats aus

B.1. 5 bis 90 Gew.-Teilen, vorzugsweise 30 bis 80 Gew.-Teilen, einer Mischung aus

B.1.1 50 bis 95 Gew.-% Styrol, α-Methylstyrol, kernsubstituiertem Styrol, Methylmethacrylat oder Mischungen daraus, und

B.1.2 50 bis 5 Gew.-% (Meth)Acrylnitril, Methylmethacrylat, Maleinsäureanhydrid, N-substituiertem Maleinimid oder Mischungen daraus, auf

B.2 95 bis 10 Gew.-Teile, vorzugsweise 70 bis 20 Gew.-Teile, eines Acrylatkautschuks mit einer Glastemperatur $T_G \leq 10°C$,

C. 5 bis 30 Gew.-Teile, bezogen auf 100 Gew.-Teile aus A + B + C, eines thermoplastischen Copolymerisats aus

C.1 50 bis 95 Gew.-% Styrol, α-Methylstyrol, kernsubstituiertem Styrol, Methylmethacrylat oder Mischungen daraus, und

C.2 50 bis 5 Gew.-% (Meth)Acrylnitril, Methylmethacrylat, Maleinsäureanhydrid, N-substituiertem Maleinimid oder Mischungen daraus,

D. 0,05 bis 2,0 Gew.-Teile, insbesondere 0,1 bis 1,0 Gew.-Teile, bezogen auf 100 Gew.-Teile aus A + B + C, eines Tetrafluorethylenpolymerisats mit mittleren Teilchengrößen von 0,05 bis 20 µm und einer Dichte von 1,2 bis 1,9 g/cm³ wobei die Komponente D in Form einer koagulierten Mischung von Emulsionen der Tetrafluorethylenpolymerisate D mit Emulsionen von maximal 4 Gew.-Teilen, mindestens jedoch 0,1 Gew.-Teilen, bezogen auf 100 Gew.-Teile der Summe der Komponenten A + B + C, an Pfropfpolymerisaten

E. aus 5 bis 90 Gew.-Teilen, vorzugsweise 30 bis 80 Gew.-Teilen, einer Mischung aus

E.1.1 50 bis 95 Gew.-% Styrol, α-Methylstyrol, kernsubstituiertem Styrol, Methylmethacrylat oder Mischungen daraus und

E.1.2 50 bis 5 Gew.-% (Meth)Acrylnitril, Methylmethacrylat, Maleinsäureanhydrid, N-substituiertem Maleinimid oder Mischungen daraus, auf

E.2 95 bis 10 Gew.-Teile, vorzugsweise 70 bis 20 Gew.-Teile, eines Kautschuks mit einer Glastemperatur $T_G \leq 10°C$,

eingesetzt wird, und wobei das Gewichtsverhältnis Pfropfpolymerisat E zum Tetrafluorethylenpolymerisat D zwischen 95 : 5 und 60 : 40 liegt,

F. 1 bis 5 Gew.-Teile, vorzugsweise 2 bis 4 Gew.-Teile, bezogen auf 100 Gew.-Teile A + B + C, Antimontrioxid, Antimoncarbonat, Wismuttrioxid, oder Wismutcarbonat und

G. 4 bis 12 Gew.-Teile, vorzugsweise 5 bis 10 Gew.-Teile, bezogen auf 100 Gew.-Teile A + B + C, Titandioxid und gegebenenfalls

H. bis zu 15 Gew.-Teile, bezogen auf 100 Gew.-Teile A + B + C, einer niedermolekularen, organischen Halogenverbindung, vorzugsweise einer Bromverbindung, wobei der Halogengehalt, resultierend aus den Komponenten A + H, jedoch 20 Gew.-%, bezogen auf Gesamtgewicht der Komponenten A + H nicht übersteigt.

Die erfindungsgemäßen Formmassen können zusätzlich für thermoplastische Polycarbonate oder Pfropfpolymerisate bekannte Zusätze wie Stabilisatoren, Fließmittel, Antistatika und/oder Entformungsmittel in wirksamen Mengen enthalten.

Die erfindungsgemäßen Formmassen zeichnen sich durch eine Kombination von hoher Flammwidrigkeit, Kreichstromfestigkeit, thermischer Belastbarkeit sowie guter Verarbeitbarkeit aus. Formkörper aus diesen Formmassen besitzen nach Kriechstrombelastung eine akzeptable Oberflächenqualität.

Erfindungsgemäß geeignete, thermoplastische, aromatische Copolycarbonate gemäß Komponente A sind solche auf Basis der Diphenole der Formel (I)

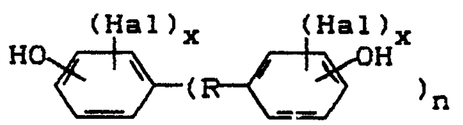 (I)

worin R eine Einfachbindung, ein $C_1$-$C_5$-Alkylen, ein $C_2$-$C_5$-Alkyliden, ein $C_5$-$C_6$-Cycloalkyliden, -S-oder -$SO_2$-, Hal, Chlor oder Brom, x 0, 1 oder 2 und "n" 1 oder null sind, wobei das Copolycarbonat gemäß Komponente A 3-20 Gew.-% Halogen, insbesondere Brom, in Form von einkondensierten halogenierten Diphenolen enthält.

Die Diphenole der Formel (I) sind beispielsweise Hydrochinon, Resorcin, 4,4'-Dihydroxydiphenyl, 2,2'-Bis-(4-hydroxyphenyl)-propan, 2,4-Bis-(4-hydroxyphenyl)-2-methylbutan, 1,1-Bis(4-hydroxyphenyl)-cyclohexan, 2,2-Bis-(3-chlor-4-hydroxyphenyl)-propan und 2,2-Bis-(3,5-dibrom-4-hydroxyphenyl)-propan.

Bevorzugte Diphenole der Formel (I) sind 2,2-Bis-(4-hydroxyphenyl)-propan, 2,2-Bis(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Die Herstellung der erfindungsgemäß geeigneten Polycarbonate gemäß Komponente A ist literaturbekannt und kann beispielsweise mit Phosgen nach dem Phasengrenzflächenverfahren oder mit Phosgen nach den Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird.

Die erfindungsgemäß geeigneten Polycarbonate gemäß Komponente A haben mittlere Gewichtmittelmolekulargewichte ($\overline{M}_w$, gemassen beispielsweise durch Ultrazentrifugation oder Streulichtmessung) von 10 000 -200 000, vorzugsweise von 20 000 -80 000.

Die erfindungsgemäß geeigneten Polycarbonate gemäß Komponente A können in bekannter Weise verzweigt sein, und zwar vorzugsweise durch den Einbau von 0,05 -2,0 Mol-%, bezogen auf die Summe der eingesetzten Diphenole, an drei-oder mehr als dreifunktionellen Verbindungen, beispielsweise solchen mit drei oder mehr als drei phenolischen OH-Gruppen.

Bevorzugte Copolycaronate sind Copolycarbonate auf Basis von Bisphenol A mit bis zu 15 Gew.-%, bezogen auf die Summe der Diphenole, an Bis-(3,5-dibrom-4-hydroxyphenyl)-propan.

Zur Herstellung der Pfropfpolymerisate gemäß Komponente B geeignete Alkylacrylatkautschuke sind solche auf der Basis von $C_1$-$C_8$-Alkylacrylaten, insbesondere Ethyl-, Butyl, Ethylhexylacrylat. Diese Alkylacrylatkautschuke können gegebenenfalls bis zu 30 Gew.-%, bezogen auf Kautschukgewicht, Monomere, wie Vinylacetat, Acrylnitril, Styrol, Methylmethacrylat und/oder Vinylether copolymerisiert enthalten.

Diese Alkylacrylatkautschuke können weiterhin kleinere Mengen, vozugsweise bis zu 5 Gew.-%, bezogen auf Kautschukgewicht, vernetzend wirkender, ethylenisch ungesättigter Monomerer enthalten. Solche Vernetzer sind z.B. Alkylendioldi-(meth)-acrylate, Polyesterdi-(meth)-acrylate, Divinylbenzol, Tri-Vinylbenzol, Triallylcyanurat, Allyl-(meth)-acrylat, Butadien oder Isopren. Solche Alkylacrylate sind bekannt.

Die Kautschuke liegen in den Pfropfpolymerisaten B in Form wenigstens partiell vernetzter Teilchen einer mittleren Teilchengröße von 0,09 bis 5 µm, insbesondere 0,1 bis 1 µm vor. Die Pfropfpolymerisate B werden durch radikalische Pfropfcopolymerisation der eingangs definierten Monomerengemische aus B.1.1 und B.1.2 in Gegenwart der zu pfropfenden Alkylacrylatkautschuke B.2 hergestellt und sind durchweg bekannt. Bevorzugte Herstellungsverfahren für die Pfropfpolymerisate B sind Emulsions-, Lösungs-, Masse- oder Suspensionspolymerisation. Als kernsubstituierte Styrole seien Halogenstyrole und p-Methylstyrol erwähnt.

Acrylatkautschuke als Pfropfgrundlage können auch Produkte sein, die einen vernetzten Dienkautschuk aus einem oder mehreren konjugierten Dienen, wie Polybutadien oder ein Copolymerisat eines konjugierten Diens mit einem ethylenisch ungesättigten Monomer, wie Styrol und/oder Acrylnitril, als Kern enthalten.

Bevorzugte Copolymerisate gemäß Komponente C sind solche aus wenigstens einem Monomeren aus der Reihe Styrol, α-Methylstyrol, Halogenstyrol gemäß C.1 mit wenigstens einem Monomeren aus der Reihe Acrylnitril, Methacrylnitril, Methylmethacrylat, Maleinsäureanhydrid gemäß C.2.

Copolymerisate gemäß Komponente C entstehen häufig bei der Pfropfpolymerisation zur Herstellung der Komponente B als Nebenprodukte, besonders dann, wenn große Mengen Monomere auf kleine Mengen Kautschuk gepfropft werden.

Die erfindungsgemäß einzusetzende Menge an Copolymerisat C von 5 bis 30 Gew.-Teile, bezogen auf 100 Gew.-Teile aus A + B + C, bezieht diese Nebenprodukte der Pfropfpolymerisation nicht mit ein.

Die Copolymerisate gemäß Komponente C sind harzartig, thermoplastisch und kautschukfrei. Besonders bevorzugte Copolymerisate C sind solche aus Styrol mit Acrylnitril und gegebenenfalls mit Methylmethacrylat, aus α-Methylstyrol mit Acrylnitril und gegebenenfalls mit Methylmethacrylat oder aus Styrol und α-Methylstyrol mit Acrylnitril und gegebenenfalls mit Methylmethacrylat.

Besonders bevorzugte Gewichtsverhältnisse im thermoplastischen Copolymerisat C sind 60 bis 80 Gew.-% C.1. und 40 bis 20 Gew.-% C.2.

Die Copolymerisate gemäß Komponente C sind bekannt und lassen sich durch radikalische Polymerisation, insbesondere durch Emulsions-, Suspensions-, Lösungs-oder Massepolymerisation herstellen. Die Copolymerisate gemäß Komponente C besitzen vorzugsweise Molekulargewichte $\overline{M}$ w (Gewichtsmittel, ermittelt durch Litchtstreuung oder Sedimentation) zwischen 15 000 und 200 000.

Die erfindungsgemäß geeigneten Tetrafluorethylenpolymerisate gemäß Komponente D sind Polymere mit Fluorgehalten von 65 bis 76 Gew.-%. Beispiele sind Polytetrafluorethylen, Tetrafluorethylen-Hexafluorpropylen-Copolymere oder Tetrafluorethylen-Copolymerisate mit geringen Mengen fluorfreier copolymerisierbarer ethylenisch ungesättigter Monomerer.

Diese Polymerisate sind bekannt. Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium-oder Ammoniumperoxidisulfat bei Drucken von 7 bis 71 kg/cm$^2$ und bei Temperaturen von 0 bis 200 °C, vorzugsweise bei Temperaturen von 20 bis 100°C (US-Patent 2 393 967).

Die Teilchengröße der erfindungsgemäsen Tetrafluorethylenpolymerisate liegt im Bereich von 0,05 bis 20 µm und die Dichte im Bereich von 1,2 bis 1,9 g/cm$^3$.

Durch den Zusatz von Tetrafluorethylenpolymerisaten wird insbesondere das Abtropfen der Formmassenschmelze während des Brandvorganges reduziert oder ganz verhindert. Durch die Art der Einarbeitung der Tetrafluorethylenpolymerisate wird verhindert, daß die aus den erfindungsgemäßen Formmassen hergestellten Formkörper mangelhafte Oberflächen, beispielsweise Mikrorisse oder Schlieren haben. Außerdem wird durch den Zusatz des feinteiligen Polytetrafluorethylens eine hohe Flammwidrigkeit und Kreichstromfestigkeit erreicht, wenn der Gesamtgehalt an Tetrafluorethylenpolymerisat beziehungsweise Halogen in den angegebenen Grenzen gehalten wird.

Zur Herstellung einer entsprechenden Mischung wird zuerst eine wäßrige Emulsion (Latex) eines Pfropfpolymerisates E mit mittleren Latexteilchengrößen von 0,1 bis 2 µm, insbesondere 0,2 bis 0,6 µm, mit einer feinteiligen Emulsion eines Tetrafluorethylenpolymerisats in Wasser mit mittleren Teilchengrößen von 0,05 bis 20 µm, insbesondere von 0,08 bis 10 µm vermischt; geeignete Tetrafluorethylenpolymerisat-Emulsionen besitzen üblicherweise Feststoffgehalte von 30 bis 70 Gew.-%, insbesondere von 50 bis 60 Gew.-%. Die Emulsionen der Pfropfpolymerisate E besitzen Feststoffgehalte von 25 bis 60 Gew.-%, insbesondere von 30 bis 45 Gew.-%.

In der Emulsionsmischung liegt das Gewichtsverhältnis Pfropfpolymerisat E zum Tetrafluorethylenpolymerisat D zwischen 95 : 5 und 60 : 40. Anschließend wird die Emulsionsmischung in bekannter Weise koaguliert, beispielsweise durch Sprühtrocknung, Gefriertrocknung oder Koagulation mittels Zusatz von anorganischen oder organischen Salzen, Säuren, Basen oder organischen, mit Wasser mischbaren Lösungsmitteln, wie Alkoholen, Ketonen, vorzugsweise bei Temperaturen von 20 bis 150°C, insbesondere von 50 bis 100° C. Falls erforderlich, kann bei 50 bis 200°C, bevorzugt 70 bis 100°C, getrocknet werden.

Geeignete Tetrafluorethylenpolymerisat-Emulsionen sind handelsübliche Produkte und werden beispielsweise von der Firma Du Pont als Teflon 30 N angeboten.

Bezüglich der schwierigen Verarbeitung von Polytetrafluorethylenen sei noch auf FR-PS 1 412 767 verwiesen, bezüglich der Einarbeitung von Polytetrafluorethylenen in Thermoplaste, wie aromatische Polycarbonate oder Polymerisate von ungesättigten Monomeren, sei noch auf US-Patent 3 294 871 hingewiesen sowie auf US-Patent 3 005 795, insbesondere Spalten 3/4, wo Fällung und Koagulation erwähnt sind.

Zur Herstellung der Pfropfpolymerisate gemäß Komponente E geeignete Kautschuke sind insbesondere Polybutadien, Butadien/Styrol-Copolymerisate mit bis zu 30 Gew.-%, bezogen auf Kautschukgewicht, eines niederen Alkylesters von Acryl-oder Methacrylsäure (beispielsweise Methylmethacrylat, Ethylacrylat, Methylacrylat oder Ethylmethacrylat). Weitere geeignete Kautschuke sind beispielsweise Polyisopren oder Polychloropren. Geeignet sind weiterhin Alkylacrylatkautschuke auf der Basis von $C_1$-$C_8$-Alkylacrylaten, insbesondere Ethyl-, Butyl-, Ethylhexylacrylat. Diese Alkylacrylatkautschuke können gegebenenfalls bis zu 30 Gew.-%, bezogen auf Kautschukgewicht, Monomere, wie Vinylacetat, Acrylnitril, Styrol, Methylmethacrylat und/oder Vinylether copolymerisiert enthalten.

Diese Alkylacrylatkautschuke können weiterhin kleinere Mengen, vorzugsweise bis zu 5 Gew.-%, bezogen auf Kautschukgewicht, vernetzend wirkender ethylenisch ungesättigter Monomere enthalten. Solche Vernetzer sind z.B. Alkylendioldi-(meth)-acrylate, Polyesterdi-(meth)-acrylate, Divinylbenzol, Tri-Vinylbenzol, Triallylcyanurat, Allyl-(meth)-acrylat, Butadien und Isopren. Solche Alkylacrylate sind bekannt. Acrylatkautschuke als Pfropfgrundlage können auch Produkte sein, die einen vernetzten Dienkautschuk aus einem oder mehreren konjugierten Dienen, wie Polybutadien oder ein Copolymerisat eines koinjugierten Diens mit einem ethylenisch ungesättigten Monomer, wie Styrol und/oder Acrylnitril, als Kern enthalten. Andere geeignete Kautschuke sind z.B. EPDM-Kautschuke, also Kautschuke aus Ethylen, Propylen und einem unkonjugierten Dienmonomer.

Bevorzugte Kautschuke zur Herstellung der Pfropfpolymerisate E sind Dienmononmer-und Alkylacrylatkautschuke.

Die Kautschuke liegen in den Pfropfpolymerisaten E in Form wenigstens partiell vernetzter Teilchen einer mittleren Teilchengröße von 0,1 bis 2,0 µm, insbesondere 0,2 bis 0,6 µm, vor.

Die Pfropfpolymerisate E werden durch radikalische Pfropfcopolymerisation der eingangs definierten Monomerengemische E.1.1 und E.1.2 in Gegenwart der zu pfropfenden Kautschuke E.2 hergestellt und sind durchweg bekannt. Be vorzugte Herstellungsverfahren für die Pfropfpolymerisate E sind Emulsions-, Lösungs-, Masse-oder Suspensionspolymerisation. Besonders bevorzugte Pfropfpolymerisate E sind die sogenannten ABS-Polymerisate. Als kernsubstituiertes Styrol sei p-Methylstyrol erwähnt.

Da der Einsatz der erfindungsgemäß zu verwendenden Pfropfpolymerisate E durch Vorabmischung ihrer Emulsionen mit Emulsionen der Komponente D erfolgt, ist die Herstellung der Komponente E nach dem Verfahren der Emulsionspolymerisation am zweckmäßigsten.

Die Synergistischen Komponenten F, Antimon-oder Wismuttrioxid bzw. -carbonat, werden vorzugsweise als feinteilige Pulver zur Herstellung der erfindungsgemäßen Formmasse verwendet; als alternatives Verfahren können auch $Sb_2O_3$-Dispersionen mit Emulsionen der Pfropfpolymerisate E abgemischt und gemeinsam durch Koagulation aufgearbeitet werden; solche Konzentrate eignen sich durch besonders gut zur Flammwidrigkeitsaurüstung von Thermoplasten (vergleiche Europäische Patentschrift 1913).

Als $TiO_2$ wird ein hydrophobes und gegenüber hochmolekularen, aromatischen Polycarbonaten inertes Pulver eingesetzt. Falls erforderlich, können diese Materialien, was man in bekannter Weise erreicht, z.B. durch Belegen der Pigmentoberfläche mit hydrophoben Kunststoffen oder mit langkettigen Fettsäuren, hydrophobiert werden.

Erfindungsgemäß geeignete niedermolekulare, organische Halogenverbindungen gemäß Komponente H sind im Prinzip alle, die bei der Herstellung und Verarbeitung der erfindungsgemäß Formmassen nicht flüchtig und thermisch stabil sind, d.h. dabei kein Halogen abspalten und somit im Brandfall ihre Flammschutzwirkung ausüben können. Insbesondere sind geignet Decabromidphenylether, Octabromdiphenyl, Octabromdiphenylether und Tribromtetrachlortoluol, ferner oligomere Bromverbindungen wie beispielsweise Oligocarbonate auf Basis Tetrabrombisphenol A.

Die erfindungsgemäß Formmassen, bestehend aus den Komponenten A, B, C, D, E, F, G und gegebenenfalls H sowie gegebenenfalls weiteren bekannten Zusätzen, wie Stabilisatoren, Fließmitteln, Antistatika und/oder Entformungsmitteln, werden hergestellt, indem man die jeweiligen Bestandteile in bekannter Weise vermischt und bei Temperaturen von 200°C bis 330°C in üblichen Aggregaten, wie Innenknetern, Extrudern oder Doppelwellenschnecken schmelzcompoundiert oder schmelzextrudiert, wobei erfindungsgemäß die Komponente D nur in Form der bereits erwähnten koagulierten Mischung mit der Komponente E eingesetzt wird.

Gegenstand der vorliegenden Erfindung ist somit auch ein Verfahren zur Herstellung von thermoplastischen Formmassen, bestehend aus den Komponenten A, B, C, D, E, F, G und gegebenenfalls H, Stabilisatoren, Fließmitteln, Antistatika und/oder Entformungsmitteln, das dadurch gekennzeichnet ist, daß man die Komponenten A, B, C, D , E, F, G und gegebenenfalls H, Stabilisatoren, Fließmittel, Antistatika und/oder Entformungsmittel nach erfolgter Vermischung bei Temperaturen von 200 -330°C in gebräuchlichen Aggregaten schmelzcompoundiert oder schmelzextrudiert, wobei die Komponente D nur in Form einer koagulierten Mischung mit der Komponente E eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art (z.B. für Haushaltsgeräte wie Saftpressen, Kaffeemaschinen, Mixer) oder Abdeckplatten für den Bausektor und Teile für den Kfz-Sektor. Sie werden insbesondere auf dem Gebiet der Elektrotechnik, z.B. für Schlaterblenden Steckdosen, Steckerleisten und Schaltkästen eingesetzt, weil sie sehr gute elektrische Eigenschaften haben.

Eine weitere Form der Verarbeitung ist die Herstellung von Formkörpern durch Tiefziehen aus vorher hergestellten Platten oder Folien.

Teilchengröße bedeutet immer mittlere Teilchendurchmesser $d_{50}$, ermittelt durch Ultrazentrifugenmessungen nach W. Scholtan et al., Kolloid-Z und Z. Polymere 250 (1972 Seiten 782-796).

<u>Beispiele</u>

Eingesetzte Legierungskomponenten

A. Ein Copolycarbonat, bestehend auf Basis von Bisphenol A mit 10 Gew.-% Tetrabrombisphenol A mit einer relativen Lösungsviskosität von 1,284, gemessen in $CH_2Cl_2$ bei 25°C und einer Konzentration von 0,5 g/l; Gehalt an Brom: ca. 5 Gew.-%.

B. SAN-Pfropfpolymerisat von 40 Gew.-% Styrol-Acrylnitril-Gemisch (im Gewichtsverhältnis von 72 : 28) auf 60 % teilchenförmigen Polybutylacrylatkautschuk, einer mittleren Teilchengröße ($d_{50}$) von 0,5 µm, der einen Butadienkern von 0,1 µm enthält, hergestellt durch Emulsionspolymerisation gemäß DE-OS 2 259 564.

C. Styrol-Acrylnitril-Copolymerisat mit einem Styrol-Acrylnitril-Verhältnis von 72 : 28 und einer Grenzviskosität von $[\eta]$ = 0,55 dl/g (Messung in Dimethylformamid bei 20°C).

D. Tetrafluorethylenpolymerisat als koagulierte Mischung aus einem SAN-Pfropfpolymerisat und einer Tetrafluorethylen polymerisat-Emulsion in Wasser; Gehalt an Tetrafluorethylenpolymerisat in der Mischung: 10 Gew.-%, bezogen auf Mischung PTFE-SAN-Pfropfpolymerisat. Die Tetrafluorethylenpolymerisat-Emulsion besitzt einen Feststoffgehalt von 60 %; die Teilchengröße liegt zwischen 0,05 und 0,5 µm.
Herstellung von D: Die Emulsion des Tetrafluorethylenpolymerisates wurde mit der Emulsion des SAN-Pfropfpolymerisat E vermischt und mit 1,8 Gew.-%, bezogen auf Polymerfeststoff, phenolischer Antioxidantien stabilisiert. Bei 85 -95°C wird die Mischung mit einer wäßrigen Lösung von $MgSO_4$ (Bittersalz) und Essigsäure bei pH 4 -5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

E. SAN-Pfropfpolymerisat von 50 Gew.-% Styrol-Acrylnitril-Gemisch (im Gewichtsverhältnis von 72 : 28) auf 50 Gew.-% teilchenförmiges Polybutadien mit einer mittleren Teilchengröße ($d_{50}$) von 0,4 µm, erhalten durch Emulsionspolymerisation.

F. $Sb_2O_3$

G. $TiO_2$

H. Tetrabrombisphenol-A-Oligocarbonat mit Phenyl-Endgruppen und einem Bromgehalt von 52 Gew.-%.

I. Monocarbonsäureester von Monoalkoholen (rein aliphatisch) mit einer Durchschnittskettenlänge von 39 C-Atomen (Loxiol G 47).

Herstellung der erfindungsgemäßen Formmassen:

Die Compoundierung der Komponenten A bis G und gegebenenfalls H erfolgte auf einem Doppelwellenextruder (Werner und Pfleiderer) vom Typ ZSK 53 bei einer Temperatur von 230°C.

Die Herstellung von Formkörpern erfolgte, soweit nicht anders angegeben, auf einer Spritzgußmaschine bei 260°C.

Die Bestimmung der Kriechstromfestigkeit erfolgt gemäß DIN 53 480 gemäß Methode KC F an Platten der Abmessungen 60 x 40 x 2 mm, hergestellt bei 250°C, wobei zwischen 2 Elektroden bei einer Spannung von 375 V eine Prüflösung ohne Entspannungszusatz getropft wird. Die Prüfung gilt als bestanden, wenn 5 mal nach 101 Tropfen sich kein Kriechweg ausbildet und der Prüfling nicht brennt.

Die Bestimmung der Kerbschlagzähigkeit erfolgte in Anlehnung an DIN 53 453/ISO R 179 an Stäben der Abmessung 50 x 6 x 4 mm, wobei die Stäbe mit einer V-förmigen Kerbe der Kerbtiefe 2,7 mm versehen wurden.

Die Beurteilung der Wärmeformbeständigkeit nach Vicat erfolgte gemäß DIN 53 460.

Die Bestimmung der Formkörperoberfläche erfolgte an den Platten der Abmessung 60 x 40 x 2 mm, hergestellt bei 250°C nach Ausprüfung der Kriechstromfestigkeit gemäß KCF bei 375 V.

Das Brandverhalten der Proben wurde nach UL-Subj. 94 V in Prüfkörperdicken von 2,5 bz.w 2,0 bzw. 1,6 mm gemessen. Der UL-94-Test wird wie folgt durchgeführt:

Substanzproben werden zu Stäben der Abmessungen 127 x 12,7 x 2,5 bzw. 2,0 bzw. 1,6 mm geformt. Die Stäbe werden vertikal so montiert, daß die Unterseite des Probekörpers sich 305 mm über einem Streifen Verbandstoff befindet. Jeder Probestab wird einzeln mittels zweier aufeinanderfolgender Zündvorgänge von 10 s Dauer entzündet, die Brenneigenschaften nach dem Zündvorgang werden beobachtet und danach die Proben bewertet. Zum Entzünden der Probe wird ein Bunsenbrenner mit einer 10 mm (3,8 inch) hohen blauen Flamme von Erdgas mit einem Wärmeinhalt von $3{,}73 \times 10^4$ kJ/m$^3$ (1,000 BUT per cubic foot) benutzt.

Die UL-94 V-O-Klassifizierung umfaßt die nachstehend beschriebenen Eigenschaften von Materialien, die gemäß der UL-94-Vorschrift geprüft wurden. Die Polycarbonatformmassen in dieser Klasse enthalten keine Proben, die länger als 10 s nach jeder Einwirkung der Testflamme brennen, sie zeigen keine Gesamtflammzeit von mehr als 50 s bei der zweimaligen Flammwirkung auf jeden Probensatz; sie enthalten keine Proben, die vollständig bis hinauf zu der am oberen Ende der Probe befestigten Halteklammer abbrennen; sie weisen keine Proben auf, die die unterhalb der Probe angeordnete Watte durch brennende Tropfen oder Teilchen entzünden; sie enthalten auch keine Proben, die länger als 30 s nach Entfernen der Testflamme glimmen.

Andere UL-94-Klassifizierungen bezeichnen Proben, die weniger flammwidrig und selbstverlöschend sind und die flammende Tropfen und Teilchen abgeben. Diese Klassifizierungen werden mit UL-94 V-1 und V-2 bezeichnet. "n. b." heißt "nicht bestanden" und ist die Klassifizierung von Proben, die eine Nachbrennzeit von ≥ 30 s aufweisen.

Die Bestimmung der Glühdrahtbeständigkeit bei einer Glühdrahttemperatur von 960°C erfolgte gemäß EDF-Norm AH 60 E 01 an Platten der Abmessung 60 x 90 x 3 mm bzw. 60 x 90 x 2 mm.

Um die Prüfung zu bestehen, darf die Probe nicht vollständig verbrennen, nicht länger als 5 s weiterbrennen. Außerdem dürfen keine brennenden oder glühenden Teilchen auftreten. Der Versuch muß dabei 5 mal durchgeführt werden.

| | | erfindungsgemäße Versuche | | | | Vergleichsversuche | | | |
|---|---|---|---|---|---|---|---|---|---|
| A | (Gew.-Tle.) | 70 | 70 | 70 | 70 | 70 | 70 | 70 | 70 |
| B | " | 18 | 15 | 15 | 18 | | 15 | 15 | 18 |
| C | " | 12 | 15 | 15 | 12 | 12 | 15 | 15 | 12 |
| D | " | 1,0 | 1,0 | 1,0 | 2,0 | 1,0 | 1,0 | | |
| E | " | | | | | 18 | | | |
| F | " | 2,4 | 2,4 | 2,4 | 2,4 | 2,4 | 2,4 | 2,4 | 2,4 |
| G | " | 7,0 | 8,0 | 6,0 | 8,0 | 8,0 | 2,0 | 7,0 | 7,0 |
| H | " | | | | 2,0 | | | | |
| J | " | 0,5 | 0,5 | | 0,5 | 0,5 | 0,5 | 0,5 | 0,5 |
| Kriechstromfestigkeit | | best. | best. | best. | best. | n.b. | n.b. | n.b. | n.b. |
| UL-94 V | 2,5 mm | V-O | V-O | V-O | V-O | | | V-2 | V-2 |
| | 2,0 mm | V-1 | | | | | | | |
| | 1,6 mm | | | | V-O | | | | |
| Glühdraht 960°C | (3,0 mm) | best. | best. | best. | | | | | |
| | (2,0 mm) | | | | best | | | | |
| Vicat B 120 (°C) | | 129 | 129 | 127 | 128 | | | 132 | 129 |
| Kerbschlagzähigkeit ($kJ/m^2$) | | 37,2 | 30,7 | 30 | | | | 17,5 | 37,2 |
| Oberflächenbeschaffenheit | | + | + | + | + | - | - | - | - |

best. = bestanden
n.b. = nicht bestanden

\+ Oberfläche geringfügig angegriffen
\- Oberfläche stark angegriffen

In allen Versuchseinstellungen sind 0,2 Gew.-Teile bezogen auf 100 Teile A + B + C an Pentaerythrittetrasterat enthalten.

## Ansprüche

1. Thermoplastische Formmassen, enthaltend

A. 60 bis 85 Gew.-Teile, bezogen auf 100 Gew.-Teile A + B + C, eines halogenhaltigen Copolycarbonats aus einem zweiwertigen Phenol und einem zweiwertigen halogenierten Phenol, wobei das Copolycarbonat 3-20 Gew.-% Halogen enthält,

B. 10 bis 30 Gew.-Teile, bezogen auf 100 Gew.-Teile A + B + C, eines Pfropfpolymerisats aus

B.1. 5 bis 90 Gew.-Teilen einer Mischung aus

B.1.1 50 bis 95 Gew.-% Styrol, α-Methylstyrol, kernsubstituiertem Styrol, Methylmethacrylat oder Mischungen daraus, und

B.1.2 50 bis 5 Gew.-% (Meth)Acrylnitril, Methylmethacrylat, Maleinsäureanhydrid, N-substituiertem Maleinimid oder Mischungen daraus, auf

B.2 95 bis 10 Gew.-Teile eines Acrylatkautschuks mit einer Glastemperatur $T_G \leq 10°C$,

C. 5 bis 30 Gew.-Teile, bezogen auf 100 Gew.-Teile aus A + B + C, eines thermoplastischen Copolymerisats aus

C.1 50 bis 95 Gew.-% Styrol, α-Methylstyrol, kernsubstituiertem Styrol, Methylmethacrylat oder Mischungen daraus, und

C.2 50 bis 5 Gew.-% (Meth)Acrylnitril, Methylmethacrylat, Maleinsäureanhydrid, N-substituiertem Maleinimid oder Mischungen daraus,

D. 0,05 bis 2,0 Gew.-Teile, bezogen auf 100 Gew.-Teile aus A + B + C, eines Tetrafluorethylenpolymerisats mit mittleren Teilchengrößen von 0,05 bis 20 µm und einer Dichte von 1,2 bis 1,9 g/cm³, wobei die Komponente D in Form einer koagulierten Mischung von Emulsionen der Tetrafluorethylenpolymerisate D mit Emulsionen von maximal 4 Gew.-Teilen, mindestens jedoch 0,1 Gew.-Teilen, bezogen auf 100 Gew.-Teile der Summe der Komponenten A + B + C, an Pfropfpolymerisaten

E. aus 5 bis 90 Gew.-Teilen, einer Mischung aus

E.1.1 50 bis 95 Gew.-% Styrol, α-Methylstyrol, kernsubstituiertem Styrol, Methylmethacrylat oder Mischungen daraus und

E.1.2 50 bis 5 Gew.-% (Meth)Acrylnitril, Methylmethacrylat, Maleinsäureanhydrid, N-substituiertem Maleinimid oder Mischungen daraus, auf

E.2 95 bis 10 Gew.-Teile, eines Kautschuks mit einer Glastemperatur $T_G \leq 10°C$,

eingesetzt wird, und wobei das Gewichtsverhältnis Pfropfpolymerisat E zum Tetrafluorethylenpolymerisat D zwischen 95 : 5 und 60 : 40 liegt,

F. 1 bis 5 Gew.-Teile, bezogen auf 100 Gew.-Teile A + B + C, Antimontrioxid, Antimoncarbonat, Wismuttrioxid, oder Wismutcarbonat und

G. 4 bis 12 Gew.-Teile, bezogen auf 100 Gew.-Teile A + B + C, Titandioxid und gegebenenfalls

H, bis zu 15 Gew.-Teile, bezogen auf 100 Gew.-Teile A + B + C, einer niedermolekularen, organischen Halogenverbindung, wobei der Halogengehalt, resultierend aus den Komponenten A + H, jedoch 20 Gew.-%, bezogen auf Gesamtgewicht der Komponenten A + H, nicht übersteigt.

2. Formmassen gemäß Anspruch 1, dadurch gekennzeichnet, daß sie die Komponente D in Mengen von 0,1 -1,0 Gew.-Teilen enthalten.

3. Formmassen gemäß Ansprüchen 1 und 2, dadurch gekennzeichnet, daß die Komponente B aus 30 bis 80 Gew.-Teilen B.1. und 70 bis 20 Gew.-Teilen B.2. zusammengesetzt ist.

4. Formmassen gemäß Ansprüchen 1 bis 3, dadurch gekennzeichnet, daß die Komponente E aus 30 bis 80 Gew.-Teilen E.1 und 70 bis 20 Gew.-Teilen E.2 zusammengesetzt sind.

5. Formmassen gemäß Ansprüchen 1 bis 4, dadurch gekennzeichnet, daß sie die Komponente F in Mengen von 2 bis 4 Gew.-Teilen enthalten.

6. Formmassen gemäß Ansprüchen 1 bis 5, dadurch gekennzeichnet, daß sie die Komponente G in Mengen von 5 bis 10 Gew.-Teilen enthalten.

7. Formmassen gemäß Ansprüchen 1 bis 6, bestehend aus den Komponenten A bis G und gegebenenfalls H und zusätzlich mindestens einem Zusatz, ausgewählt aus der Gruppe der Stabilisatoren, Fließmittel, Antistatika und/oder Entformungsmittel.

8. Verfahren zur Herstellung der Formmassen der Ansprüche 1 bis 6, dadurch gekennzeichnet, daß man die Komponenten A bis G und gegebenenfalls H in bekannter Weise vermischt und danach bei Temperaturen von 200 bis 330°C in gebräuchlichen Aggregaten schmelzcompoundiert oder -schmelzextrudiert, wobei die Komponente D nur in Form einer koagulierten Mischung mit der Komponente E eingesetzt wird.

9. Verfahren zur Herstellung der Formmassen des Anspruchs 7 gemäß Anspruch 8, dadurch gekennzeichnet, daß man mindestens einen Zusatz, ausgewählt aus der Gruppe der Stabilisatoren, Fließmittel, Antistatika und Entformungsmittel einbezieht.